# EUROPÄISCHE PATENTSCHRIFT

(11) **EP 1 396 385 B1**
(45) Veröffentlichungstag und Bekanntmachung des Hinweises auf die Patenterteilung: **23.04.2008**
(21) Anmeldenummer: 02019984.0
(22) Anmeldetag: 05.09.2002
(51) Int. Cl.: B60R 11/00, F16M 11/00, F16B 47/00

(54) **Anordnung zum Befestigen eines Gerätes oder eines Gerätehalters auf einer Unterlage durch Kleben**
Arrangement for fixing by glueing an apparatus or an apparatus holder on a support
Ensemble pour fixer par collage un appareil ou un support d'appareil sur une embase

(43) Veröffentlichungstag der Anmeldung: 10.03.2004
(73) Patentinhaber: SIEMENS AKTIENGESELLSCHAFT, 80333 München (DE)
(72) Erfinder: Umfahrer, Klaus, 70957 Stuttgart (DE)

(56) Entgegenhaltungen:
- EP-A- 0 844 406
- EP-A- 0 902 199
- WO-A-01/20877
- WO-A-96/15897
- WO-A-99/57447

## Beschreibung

Die Erfindung betrifft eine Anordnung zum Befestigen eines Gerätes bzw. eines Gerätehalters auf einer Unterlage durch Kleben, wobei dem Gerät bzw. dem Gerätehalter wenigstens ein Befestigungselement mit einer daran ausgebildeten Flanschfläche zugeordnet ist.

Geräte, die nicht als Einbaugeräte konzipiert sind oder nicht als Einbaugeräte konzipiert werden können, weil sie für ihren Einsatzzweck, beispielweise in Kraftfahrzeugen, nicht generell vorgesehen sind oder aufgrund neuer gesetzlicher Vorschriften nachgerüstet werden müssen anderseits aber im unmittelbaren Beobachtungs- und Handhabungsbereich des Fahrers angeordnet werden sollen und/oder auf ortsfest am Straßenrand oder an Schilderbrücken installierte Kommunikationseinrichtungen auszurichten sind, müssen in der Regel unmittelbar an der Windschutzscheibe oder an der der Windschutzscheibe zugeordneten Oberseite der Armaturentafel des betreffenden Kraftfahrzeuges angebracht werden. Bei einer Befestigung auf einer Armaturentafel sind abgesehen von einer zweifelhaften ästhetischen Wirkung Schraubverbindungen wegen der für Armaturentafeln vorgesehenen Materialien gegebenenfalls nicht ausreichend funktionssicher realisierbar, außerdem dienen die Armaturentafeln als Träger für Leitungen und Kabel, deren Beschädigung zu vermeiden ist.

Die WO 99/57447 offenbart eine Gerätehalterung mit einem Fuß, wobei der Fuß auf einer Unterlage befestigt wird. An dem Fuß befindet sich ein Befestigungskissen, welches auf seiner vom Fuß abgewandten Seite eine Klebeschicht aufweist. Die Klebeschicht ist mit einer Schutzfolie abgedeckt. Zur Befestigung der Gerätehalterung auf der Unterlage wird zuerst die Schutzfolie von der Klebeschicht entfernt und der Fuß wird an der gewünschten Position aufgeklebt. Anschließend wird in das Innere des Befestigungskissens eine Zwei-Komponenten-Füllung eingebracht, die aushärtet und sich dabei an die Form der Unterlage anpasst.

Eine Befestigung mittels Klebefolien- bzw. Klebeband-Material ist jedoch für den vorgesehenen Zweck nicht zuverlässig erschütterungsfest. Demgegenüber ist ein Kleben mittels eines flüssigen oder pastösen Klebstoffs umständlich und zeitaufwendig und erfordert ein Höchstmaß an Sorgfalt bei der Handhabung des Klebstoffs. Außerdem müssen das zu befestigende Gerät, der Gerätehalter oder ein oder mehrere einzelne nicht an einem Gerätegehäuse oder an einem Gerätehalter unmittelbar ausgebildete Befestigungselemente, an denen ein Gerät oder ein Gerätehalter nachfolgend mittels Schrauben befestigt werden kann, bis zum Aushärten des Klebstoffs absolut sicher fixiert werden, was auf den in der Regel nicht horizontal gestalteten Oberseiten von Armaturentafeln erhebliche Schwierigkeiten bereitet.

Aufgabe der vorliegenden Erfindung war es somit, den Aufwand beim Befestigen eines Gerätes bzw. eines Gerätehalters durch Kleben erheblich zu reduzieren, insbesondere eine Anordnung zuschaffen, die ein reproduzierbares Kleben ohne Nacharbeit gewährleistet.

Die Lösung der Aufgabe ist dadurch gekennzeichnet, dass ein an der Flanschfläche anbringbarer, vorzugsweise auf der Unterlage haftender Abdichtring vorgesehen ist und dass an dem Befestigungselement wenigstens eine Bohrung derart ausgebildet ist, dass nach dem Aufsetzen des Befestigungselementes auf der Unterlage wenigstens der von dem Abdichtring unmittelbar umschlossene Raum für ein Verfüllen mit Klebstoff von außen zugänglich ist.

Ein bevorzugtes mit der erfindungsgemäßen Anordnung durchführbares Verfahren sieht vor, dass eine mit einer den Umrissen der Flanschfläche des Befestigungselementes entsprechenden Öffnung versehene, selbsthaftende Folienschablone an dem gegebenenfalls zuvor markierten Befestigungsort auf die Unterlage aufgelegt wird, dass die durch die Folienschablone ausgesparte Fläche der Unterlage aufgerauht und gereinigt wird, dass die Schutzfolie des zuvor an dem Befestigungselement angebrachten Abdichtungsringes abgezogen und das Befestigungselement auf die durch die Folienschablone ausgesparte Fläche der Unterlage aufgesetzt und angedrückt wird, dass mittels eines in die Einfüllöffnung einsetzbaren Werkzeuges Klebstoff in den Klebstoffraum eingespritzt wird, dass nach dem Verfüllen des Klebstoffraumes in der unmittelbaren Umgebung der Einfüllöffnung und der Entlüftungsöffnung befindliche Klebstoffreste entfernt werden und dass die Folienschablone abgezogen wird.

Weitere vorteilhafte Ausbildungen der gefundenen Lösung beschreiben die übrigen, nicht zitieren Unteransprüche.

Der Vorteil, den die Erfindung bietet ist abgesehen von der erzielbaren Reproduzierbarkeit durch eindeutig definierte Verfahrensschritte insbesondere darin zu sehen , dass ein Fixieren eines Gerätes, eines Gerätehalters oder eines einzelnen geräteunabhängigen Befestigungselementes am Befestigungsort mittels der Abdichtringe erfolgt, und zwar bevor flüssiger Klebstoff in den Klebstoffraum eingespritzt wird. Die Abdichtringe sorgen außerdem dafür, dass kein Klebstoff nach außen dringen kann und somit ein nachträgliches Entfernen von an der Klebefuge ausgetretenen Klebstoffs vermieden ist. Vorteilhaft ist eine gewisse Elastizität der vorzugsweise aus handelsüblichem Klebeband-Material gefertigten Abdichtringe, und zwar für den Ausgleich von durch Oberflächenstrukturen bedingte Unebenheiten. Die Möglichkeit, dass handelsübliche, mit einer geeigneten Einspritzdüse versehene Kartuschen für das Einfüllen von Klebstoff in dem Klebstoffraum verwendet werden können schafft eine saubere Klebestelle und vereinfacht die Handhabung erheblich. Dabei kann der Klebstoffraum für eine genau definierte Klebstoffmenge ausgebildet werden. Ebenso werden durch die Verwendung der Folienschablone exakt nur die Flächen durch Aufrauhen und Reinigen vorbereitet, an denen eine Befestigung durch Kleben erfolgen soll. Dadurch bleibt die umgebende Armaturenbrettoberfläche unbeeinflusst. Entscheidend ist die Kombination aus einem an einem Befestigungselement anbringbaren, selbsthaftenden Abdichtring und der Möglichkeit Klebstoff in einen durch den Abdichtring in der Klebeebene nach außen abgedichteten Klebstoffraum einspritzen zu können.

Im folgenden sei ein Ausführungsbeispiel beschrieben, bei dem das Befestigungselement als loses Teil verwendet ist und einem Gerätehalter, welcher der Aufnahme eines relativ schweren Gerätes dient, drei eine justierbare Befestigung des Gerätehalters auf einer Freiformfläche ermöglichende Befestigungselemente zugeordnet sind. Es zeigen:
- Figur 1: eine perspektivische Übersichtdarstellung des mit den Befestigungselementen verbundenen Gerätehalters,
- Figur 2: eine Draufsicht eines der justierbaren Befestigung dienenden Befestigungselementes mit einem daran angeordneten Abdichtring,
- Figur 3: einen Schnitt des Befestigungselementes gemäß der Schnittlinie A in Figur 2,
- Figur 4: eine Draufsicht eines weiteren Ausführungsbeispiels eines Befestigungselementes,
- Figur 5: einen Schnitt des Befestigungselementes gemäß der Schnittlinie B in Figur 4.

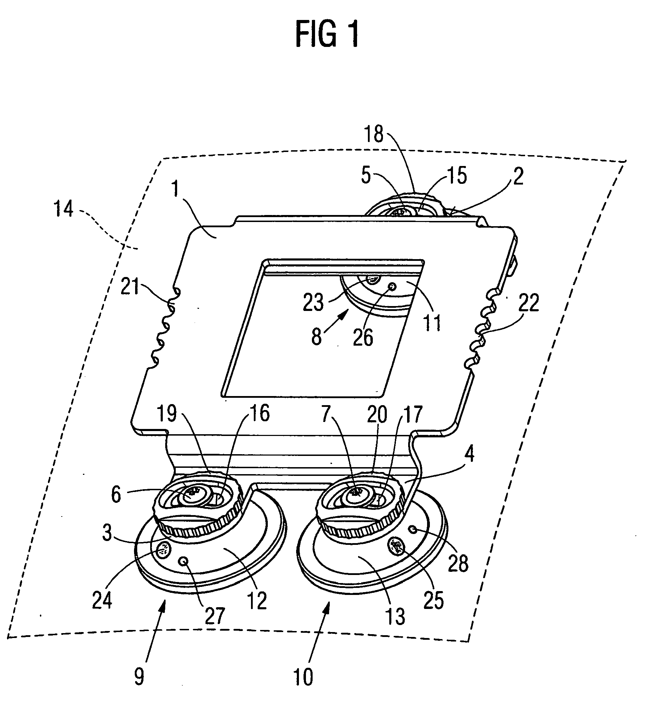

Wie aus der Figur 1 hervorgeht sind an dem Gerätehalter 1 drei Zungen 2, 3 und 4 ausgebildet. Die Zungen 2, 3, 4 weisen relativ große, in Figur 1 nicht sichtbare Durchgangsbohrungen auf, deren Bohrungskanten, wenn der Gerätehalter 1, wie in der Figur 1 dargestellt, mittels Spannschrauben 5, 6 und 7 mit Befestigungselementen 8, 9 und 10 verbunden ist, auf dem an den Befestigungselementen 8, 9, 10 ausgebildeten Kalotten 11, 12 und 13 aufliegen. D.h., zwischen dem Gerätehalter 1 und den auf einer frei geformten oder gewölbten Unterlage 14, beispielweise der Oberseite einer Armaturentafel eines Kraftfahrzeuges durch Kleben befestigten Befestigungselementen 8, 9, 10 sind Kugelgelenke realisiert, welche mittels der Spannschrauben 5, 6 und 7 feststellbar sind. Dabei ermöglichen mit diametrisch ausgebildeten Schlitzen 15, 16 und 17 sowie mit konzentrisch an den Kalotten 11, 12, 13 ausgebildeten, nicht näher bezeichneten Auflageflächen für die Schraubenköpfe versehene Stellelemente 18, 19 und 20 ein Ausrichten mit einer Verdrehsicherung beim Anziehen der Spannschrauben und einem exakten Kraftfluss in Richtung der jeweiligen Achse der Befestigungselemente 8, 9, 10. Mit 21 und 22 bezeichnete, an dem Gerätehalter 1 parallel ausgebildete Zahnreihen dienen dem wahlweise Festspannen eines Gerätes. Ferner zeigt die Figur 1 an den Befestigungselementen 8, 9, 10 ausgebildete Bohrungen 23, 24 und 25 sowie 26, 27 und 28. Erstere 23, 24, 25 dienen als Einfüllöffnungen dem Zuführen von für das Befestigen der Befestigungselemente 8, 9, 10 auf der Unterlage 14 vorgesehenen Klebstoff. Letztere, 26, 27, 28, stellen Entlüftungsöffnungen dar. In dem in Figur 1 dargestellten Zustand sind die Bohrungen 23, 24, 25, 26, 27,28 mit Klebstoff verfüllt. An dieser Stelle sei noch erwähnt, dass bei Verwendung von nur einem Befestigungselement 8, 9, 10 die Kugelgelenkverbindung im Gegensatz zur Anwendung gemäß Figur 1, bei der eine Anpassung an die Unterlage 14 vorgenommen wird, ein Verschwenken des betreffenden Gerätehalters im Raum ermöglicht.

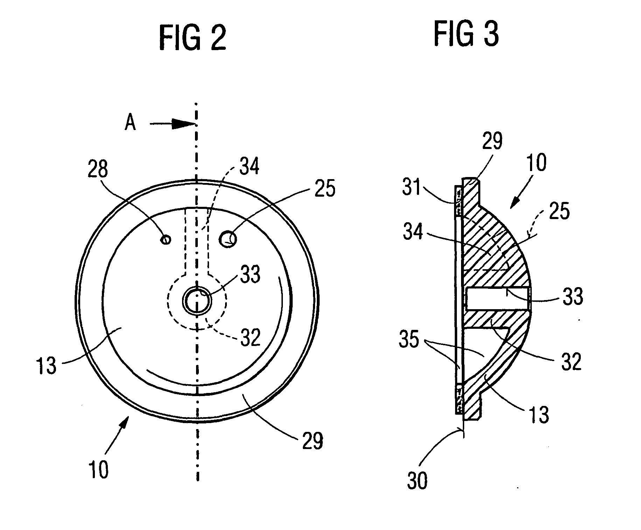

Die Figuren 2 und 3 zeigen eines der Befestigungselemente, beispielweise 10, in einer Draufsicht und im Schnitt. Dabei ist ersichtlich, dass die Kalotte 11 des Befestigungselementes 10 in einen Flansch 29 übergeht, dessen kreisringförmige Flanschfläche 30 dem Befestigen eines beispielweise beidseitig haftfähigen, aus einem Klebeband-Material hergestellten Abdichtringes 31 dient. Ein mit 32 bezeichneter zentraler Ansatz ist mit einer der Spannschraube 7 zugeordneten Gewindebohrung 33 versehen. Zwischen der Einfüllöffnung 25 und der Entlüftungsöffnung 28 ist eine Trennwand 34 vorgesehen, um ein vollständiges Verfüllen des Klebstoffraumes 35 zu sichern.

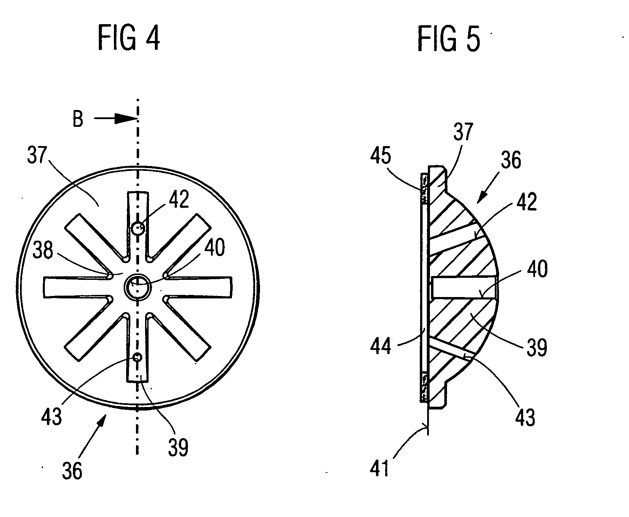

Mit den Figuren 4 und 5 ist ein weiteres Befestigungselement 36 dargestellt, welches anstatt des Befestigungselementes 10 verwendbar ist und somit ebenfalls einem justierbaren Befestigen eines Gerätes oder eines Gerätehalters dient. Es weist einen scheibenförmigen Grundkörper 37, auf an welchem ein Ansatz 38 mit daran radial angesetzten Rippen, von denen eine mit 39 bezeichnet ist, ausgebildet sind.

Dabei ist die nach außen weisende Kontur der Rippen 39 derart gestaltet, dass sie dem Radius der Kalotte 13 entspricht. Mit 40 ist eine der Spannschraube 7 zugeordnete Gewindebohrung bezeichnet. Das Befestigungselement 36 weist außerdem, im Gegensatz zum Befestigungselement 10, an welchem eine kreisringförmige Flanschfläche 30 ausgebildet ist, eine kreisförmige Flanschfläche auf. Mit 42 ist eine Einfüllöffnung, mit 43 eine Entlüftungsöffnung bezeichnet. Bei diesem Ausführungsbeispiel eines Befestigungselementes wird der Klebstoffraum 44 ausschließlich von dem durch den Abdichtring 45 umschlossenen Ringraum bestimmt. Es kann daher zweckmäßig sein einen dickeren Abdichtring 45 vorzusehen und diesen gegebenenfalls in einer an dem Grundkörper 37 ausgebildeten Fassung teilweise versenkt anzuordnen.

Der Vollständigkeithalber sei noch darauf hingewiesen, dass die Flanschflächen der Befestigungselemente geometrisch anders gestaltet sein können als kreis- oder kreisringförmig. Dementsprechend wäre dann auch ein Abdichtring nicht kreisringförmig zu gestalten sondern beispielweise rechteckförmig. Ferner sei erwähnt, dass im Falle, dass die Befestigungselemente Einzelbauteile darstellen diese nicht zwingend für ein justierbares Befestigen eines Gerätes oder eines Gerätehalters ausgebildet sein müssen. Dabei ist es auch denkbar, die Befestigungselemente unmittelbar am Gehäuse eines Gerätes oder an einem Gerätehalter auszubilden und somit Befestigungselemente in Form von zusätzlichen Bauteilen zu vermeiden.

## Patentansprüche

1. Anordnung zum Befestigen eines Gerätes bzw. eines Gerätehalters auf einer Unterlage durch Kleben, wobei dem Gerät bzw. dem Gerätehalter wenigstens ein Befestigungselement mit einer daran ausgebildeten Flanschfläche zugeordnet ist,
**dadurch gekennzeichnet,**
**dass** ein an der Flanschfläche (30, 41) anbringbarer, vorzugsweise auf der Unterlage (14) haftender Abdichtring (31, 45) vorgesehen ist und dass an dem Befestigungselement (z.B. 10 und 36) wenigstens eine Bohrung (25, 42) derart ausgebildet ist, dass nach dem Aufsetzen des Befestigungselementes (z.B. 10 und 36) auf die Unterlage (14) wenigstens der von dem Abdichtring (31, 45) unmittelbar umschlossener Raum (35, 44) für ein Verfüllen mit Klebstoff von außen zugänglich ist.

2. Anordnung nach Anspruch 1,
**dadurch gekennzeichnet,**
**dass** an dem Befestigungselement ( z.B. 10 und 36) eine dem Abdichtring (31, 45) zugeordnete Fassung ausgeformt ist und dass wenigstens eine Ringfläche des Abdichtringes (31, 45) selbstklebend ausgebildet ist.

3. Anordnung nach Anspruch 1,
**dadurch gekennzeichnet,**
**dass** der Abdichtring (31, 45) aus doppelseitig haftendem Klebeband-Material hergestellt ist.

4. Anordnung nach Anspruch 1,
**dadurch gekennzeichnet,**
**dass** der als Einfüllöffnung (25, 42) für Klebstoff ausgebildeten Bohrung eine der Kontrolle des Verfüllungsgrades dienende Entlüftungsöffnung (28, 43) zugeordnet ist.

5. Anordnung nach Anspruch 4,
**dadurch gekennzeichnet,**
**dass** die Einfüllöffnung (25, 42) derart ausgebildet ist, dass sie als Aufnahme für eine einer Klebstoffkartusche zugeordneten Spritzdüse dient.

6. Anordnung nach Anspruch 4,
**dadurch gekennzeichnet,**
**dass** bei einem Befestigungselement (z.B. 10) mit einem größeren als durch den Abdichtring (31) bestimmtem Klebstoffraum (35) die Einfüllöffnung (25) und die Entlüftungsöffnung (28) mit geringem Abstand nebeneinander angebracht sind und dass zwischen der Einfüllöffnung (25) und der Entlüftungsöffnung (28) eine die Fliessrichtung des Klebstoffs vorgebende Trennwand (34) ausgebildet ist.

7. Anordnung nach Anspruch 1,
**dadurch gekennzeichnet,**
**dass** ein oder mehrere Befestigungselemente unmittelbar an einem Gerät bzw. an einem Gerätehalter ausgebildet sind.

8. Anordnung nach Anspruch 1,
**dadurch gekennzeichnet,**
**dass** das Befestigungselement ( z.B. 10) als Einzelbauteil mit Mitteln (33) zum Befestigen eines Gerätes bzw. eines Gerätehalters (1) ausgebildet ist.

9. Verfahren zum Befestigen eines einzelnen dem Befestigen eines Gerätes bzw. eines Gerätehalters dienenden Befestigungselementes auf einer Unterlage durch Kleben unter Anwendung der Anordnung nach Anspruch 1,
**dadurch gekennzeichnet,**
**dass** eine mit einer den Umrissen der Flanschfläche des Befestigungselementes entsprechenden Öffnung versehene, selbsthaftende Folienschablone an dem gegebenenfalls zuvor markierten Befestigungsort auf die Unterlage (14) aufgelegt wird, dass die durch die Folienschablone ausgesparte Fläche der Unterlage (14) aufgerauht und gereinigt wird, dass die Schutzfolie des zuvor an dem Befestigungselement (z.B. 10) angebrachten Abdichtringes (31) abgezogen und das Befestigungselement (z.B. 10) auf die durch die Folienschablone ausgesparte Fläche der Unterlage (14) aufgesetzt und angedrückt wird, dass mittels eines in die Einfüllöffnung (25) einsetzbaren Werkzeuges Klebstoff in den Klebstoffraum (35) eingespritzt wird, dass nach dem Verfüllen des Klebstoffraumes (35) in der unmittelbaren Umgebung der Einfüllöffnung (25) und der Entlüftungsöffnung (28) befindliche Klebstoffreste entfernt werden und dass die Folienschablone abgezogen wird.

## Claims

1. Arrangement for fixing an apparatus or an apparatus holder on a support by gluing, the apparatus or the apparatus holder being assigned at least one fixing element with a flange surface formed thereon, **characterized in that** a sealing ring (31, 45) which can be fitted on the flange surface (30, 41) and preferably adheres to the support (14) is provided, and **in that** at least one bore (25, 42) is formed on the fixing element (for example 10 and 36) in such a manner that, after the fixing element (for example 10 and 36) is placed onto the support (14), at least the space (35, 44) which is directly enclosed by the sealing ring (31, 45) is accessible from the outside for filling with adhesive.

2. Arrangement according to Claim 1, **characterized in that** a mounting assigned to the sealing ring (31, 45) is formed on the fixing element (for example 10 and 36), and **in that** at least one ring surface of the sealing ring (31, 45) is of self-adhesive design.

3. Arrangement according to Claim 1, **characterized in that** the sealing ring (31, 45) is produced from double-sided adhesive tape material.

4. Arrangement according to Claim 1, **characterized in that** the bore designed as a filling opening (25, 42) for adhesive is assigned a ventilation opening (28, 43) which is used for checking the degree of filling.

5. Arrangement according to Claim 4, **characterized in that** the filling opening (25, 42) is designed in such a manner that it serves as a receptacle for a spray nozzle assigned to an adhesive-containing cartridge.

6. Arrangement according to Claim 4, **characterized in that**, in the case of a fixing element (for example 10), with a larger adhesive-containing space (35) than determined by the sealing ring (31), the filling opening (25) and the ventilation opening (28) are arranged at a small distance next to each other, and **in that** a partition (34) which predetermines the direction of flow of the adhesive is formed between the filling opening (25) and the ventilation opening (28).

7. Arrangement according to Claim 1, **characterized in that** one or more fixing elements is or are formed directly on an apparatus or on an apparatus holder.

8. Arrangement according to Claim 1, **characterized in that** the fixing element (for example 10) is designed as an individual component with means (33) for fixing an apparatus or an apparatus holder (1).

9. Method for fixing an individual fixing element, which serves to fix an apparatus or an apparatus holder, on a support by gluing, with the use of the arrangement according to Claim 1, **characterized in that** a self-adhering film template which is provided with an opening corresponding to the contours of the flange surface of the fixing element is placed onto the support (14) at the fixing location which, if appropriate, has previously been marked, **in that** the surface of the support (14) that is left blank by the film template is roughened and cleaned, **in that** the protective film of the sealing ring (31) fitted previously to the fixing element (for example 10) is pulled off and the fixing element (for example 10) is placed and pressed onto the surface of the support (14) that is left blank by the film template, **in that** adhesive is injected into the adhesive-containing space (35) by means of a tool which can be inserted into the filling opening (25), **in that** adhesive residues located in the immediate vicinity of the filling opening (25) and the ventilation opening (28) after the filling of the adhesive-containing space (35) are removed, and **in that** the film template is pulled off.

## Revendications

1. Système permettant de fixer un appareil ou, respectivement, un support d'appareil sur une embase en le collant, où au moins un élément de fixation comportant une face de bride qui y est ménagée est affecté à l'appareil ou, respectivement, au support d'appareil,
**caractérisé par le fait**
**qu'**il est prévu un anneau d'étanchéité (31, 45) pouvant être appliqué sur la face de bride (30, 41), adhérant, d'une façon préférentielle, sur l'embase (14) et que au moins un trou (25, 42) est ménagé sur l'élément de fixation (par ex., 10 et 36) de manière telle que, après la mise en place de l'élément de fixation (par ex., 10 et 36) sur l'embase (14), au moins l'espace (35, 44) entouré directement par l'anneau d'étanchéité (31, 45) est accessible de l'extérieur pour le remplir de colle.

2. Système selon la revendication 1,
**caractérisé par le fait**
**que**, sur l'élément de fixation (par ex., 10 et 36), est ménagé un logement correspondant à l'anneau d'étanchéité (31, 45) et que au moins une surface annulaire de l'anneau d'étanchéité (31, 45) est autoadhésive.

3. Système selon la revendication 1,
**caractérisé par le fait**
**que** l'anneau d'étanchéité (31, 45) est fabriqué à partir d'une bande adhésive adhérant sur ses deux faces.

4. Système selon la revendication 1,
**caractérisé par le fait**
**qu'**une ouverture d'aération (28, 43) servant au contrôle du degré de remplissage correspond au trou ménagé en tant qu'ouverture de remplissage (25, 42) pour la colle.

5. Système selon la revendication 4,
**caractérisé par le fait**
**que** l'ouverture de remplissage (25, 42) est conçue de manière telle qu'elle sert de logement pour une buse d'injection affectée à une cartouche de colle.

6. Système selon la revendication 4,
**caractérisé par le fait**
**que**, dans le cas d'un élément de fixation (par ex., 10) comportant un espace pour la colle (35) plus grand que celui déterminé par l'anneau d'étanchéité (31), l'ouverture de remplissage (25) et l'ouverture d'aération (28) sont placées à courte distance l'une de l'autre et que, entre l'ouverture de remplissage (25) et l'ouverture d'aération (28), est prévue une paroi de séparation (34) imposant la direction de l'écoulement de la colle.

7. Système selon la revendication 1,
**caractérisé par le fait**
**que** un ou plusieurs éléments de fixation sont ménagés directement sur un appareil ou sur un support d'appareil.

8. Système selon la revendication 1,
**caractérisé par le fait**
**que** l'élément de fixation (par ex., 10) est conçu comme pièce séparée avec des moyens (33) pour fixer un appareil ou un support d'appareil (1).

9. Procédé permettant de fixer un élément de fixation séparé servant à la fixation d'un appareil ou d'un support d'appareil en le collant sur une embase en utilisant le système selon la revendication 1,
**caractérisé par le fait**
**qu'**un gabarit autoadhésif composé d'une membrane, doté d'une ouverture correspondant aux contours de la face de bride de l'élément de fixation est appliqué sur l'embase (14) à l'endroit de la fixation, le cas échéant, marqué auparavant, que la surface de l'embase (14) non recouverte par le gabarit composé d'une membrane est rendue rugueuse et nettoyée, que le film de protection de l'anneau d'étanchéité (31) apporté auparavant sur l'élément de fixation (par ex., 10) est enlevé et l'élément de fixation (par ex., 10) est mis en place et pressé sur la surface de l'embase (14) non recouverte par le gabarit composé d'une membrane, que de la colle est injectée, au moyen d'un outil pouvant être inséré dans l'ouverture de remplissage (25), dans l'espace (35) prévu pour la colle, que, après le remplissage de l'espace (35) prévu pour la colle, les restes de colle se trouvant directement autour de l'ouverture de remplissage (25) et de l'ouverture d'aération (28) sont enlevés et que le gabarit composé d'une membrane est retiré.
